# EUROPEAN PATENT APPLICATION

(11) **EP 3 897 048 A1**
(43) Date of publication of application: **20.10.2021**
(21) Application number: 20170067.1
(22) Date of filing: 17.04.2020
(51) Int. Cl.: H04W 56/00

(54) **TIME SYNCHRONIZATION**

(71) Applicant: Nokia Solutions and Networks Oy, 02610 Espoo (FI)
(72) Inventor: KOZIOL, Dawid, 52-016 Wroclaw (PL); ARJONA, Andres, Tokyo, Tokyo 153-0043 (JP); VUKADINOVIC, Vladimir, 53-206 Wroclaw (PL); JACOBSEN, Thomas H., 9400 Nørresundby (DK); KOLDING, Troels, DK-9270 Klarup (DK)
(74) Representative: Swindell & Pearson Limited

(57) **Abstract**

A distributed unit (gNB-DU) of a network access node (gNB) for use in a disaggregated architecture comprising at least the distributed unit (gNB-DU) and a centralized unit (gNB-CU), the distributed unit (gNB-DU) comprising means for:
receiving reference time information transferred from the centralized unit (gNB-CU) to the distributed unit (gNB-DU);
determining a user equipment-specific propagation delay for one or more user equipments served by the distributed unit (gNB-DU), including a first user equipment (UE); and
sending control information that enables the first UE to have a reference time that is compensated for propagation delay between the distributed unit (gNB-DU) and the first UE,
wherein the control information is dependent upon
the reference time information and
a determined UE-specific propagation delay for the first UE.

## Description

### TECHNOLOGICAL FIELD

Embodiments of the present disclosure relate to time synchronization. Some relate to time synchronization in a network that has a disaggregated or split access node. Some relate to time synchronization in a 3GPP network that has a disaggregated or split base station architecture.

### BACKGROUND

Time synchronization is necessary, in at least some circumstances, to support some Industrial Internet of Things (IIoT) use-cases and/ortosupport Time Sensitive Networking (TSN) or Time Sensitive Communication (TSC) applications.

For example, some applications require a maximum 1 microsecond synchronization accuracy. When synchronization information is delivered using 3GPP 5G/New Radio (NR) system, the system has to be able to provide synchronization of accuracy below 1 microsecond.

When a wireless terminal node, for example a user equipment (UE), sets its absolute time using the Reference Time Information provided from the access node, it is important to compensate for the air interface propagation delay (and other delays), provided the total delay is significant, e.g. it impacts the accuracy of Reference Time Information to an extent where it cannot be used to synchronize the communications end points.

### BRIEF SUMMARY

According to various, but not necessarily all, embodiments there is provided a distributed unit of a network access node for use in a disaggregated architecture comprising at least the distributed unit and a centralized unit, the distributed unit comprising means for:
receiving reference time information transferred from the centralized unit to the distributed unit;
determining a user equipment-specific propagation delay for one or more user equipments served by the distributed unit, including a first user equipment; and sending control information that enables the first UE to have a reference time that is compensated for propagation delay between the distributed unit and the first UE, wherein the control information is dependent upon
the reference time information and
a determined UE-specific propagation delay for the first UE.

In some, but not necessarily all examples, the distributed unit comprises means for hosting Radio Link Control Protocol layer (RLC), Medium Access Control layer (MAC) and Physical layer (PHY) of the access node and means for communicating via a dedicated interface with the centralized unit.

In some, but not necessarily all examples, the Reference Time Information is given with reference to an exact Cell System Frame Number (SFN).

In some, but not necessarily all examples, the reference time information transferred from the centralized unit to the distributed unit is encoded within a RRC message.

In some, but not necessarily all examples, the distributed unit comprises means for estimating and storing propagation delays of connected UEs

In some, but not necessarily all examples, the UE-specific propagation delay is sent from the distributed unit directly to the first UE to enable compensation of the Reference time information at the first UE.

In some, but not necessarily all examples, the reference time information and the propagation delay are provided at different protocol layers, the reference time information being provided at Radio Resource Control layer (RRC) and the UE-specific propagation delay being provided in the Medium Access Control layer (MAC) or the physical layer..

In some, but not necessarily all examples, the distributed unit comprises:
a) means for forwarding a received reference time information message or
b) means for transferring;
   i) a single transport block comprising both the UE-specific propagation delay and the reference time information or
   ii) two transport blocks each comprising one of the UE-specific propagation delay and the reference time information.

In some, but not necessarily all examples, the distributed unit comprises means for determining whether the first UE needs to apply propagation delay compensation to the provided reference time information before providing the propagation delay to the first UE.

In some, but not necessarily all examples, the distributed unit comprises means compensating the reference time information, for propagation delay between the distributed unit and the first UE, using the determined UE-specific propagation delay for the first UE to produce a compensated reference time information that provides the control information.

In some, but not necessarily all examples, multiple UE-specific propagation delays are sent from the distributed unit direct to the centralized unit for encapsulation for onward delivery to the UE in a UE-specific RRC message.

In some, but not necessarily all examples, the distributed unit comprises means for receiving reference time information transferred from the centralized unit to the distributed unit as a compensated reference time information that provides the control information.

In some, but not necessarily all examples, the distributed unit comprises means for receiving reference time information transferred from the centralized unit to the distributed unit as uncompensated reference time information
i) in a RRC message comprising a UE-specific propagation delay for the first UE and an unmodified RRC reference time information message or
ii) in a RRC message modified to comprise an additional information element based on the UE-specific propagation delay for the first UE.

In some, but not necessarily all examples, the distributed unit comprises means for receiving reference time information transferred from the centralized unit to the distributed unit within a F1 interface application protocol (F1AP) message, wherein the F1 interface application protocol (F1AP) message comprises an indicator indicating that reference time information is transferred within the F1 interface application protocol (F1AP) message.

In some, but not necessarily all examples, the distributed unit comprises means for receiving reference time information transferred from the centralized unit to the distributed unit within a F1 interface application protocol (F1AP) message, wherein the F1 interface application protocol (F1AP) message comprises information for assisting the distributed unit in estimating a UE-specific propagation delay for the first UE, for example, information indicating a reference system frame number (SFN) used for the reference time information.

According to various, but not necessarily all, embodiments there is provided a system comprising:
at least the first UE; and
a disaggregated access node comprising a centralized unit and at least the distributed unit as claimed in any preceding claim.

In some, but not necessarily all examples, the first UE comprises means for using the control information to compensate the reference time information using the determined UE-specific propagation delay for the first UE and/or wherein the distributed unit comprises means for compensating the reference time information using the determined UE-specific propagation delay to determine the control information or wherein the distributed unit comprises means for sending the reference time information and the determined UE-specific propagation delay in one or more messages.

In some, but not necessarily all examples, the first UE comprises means for receiving the reference time information and the propagation delay in different protocol layers and/or in one or more different messages.

According to various, but not necessarily all, embodiments there is provided a computer program that when run on a computer of a distributed unit (gNB-DU enables: receiving reference time information transferred from a centralized unit to the distributed unit;
determining a user equipment-specific propagation delay for one or more user equipments served by the distributed unit, including a first user equipment (UE); and sending control information that enables the first UE to have a reference time that is compensated for propagation delay between the distributed unit and the first UE, wherein the control information is dependent upon
the reference time information and
a determined UE-specific propagation delay for the first UE.

According to various, but not necessarily all, embodiments there is provided a method comprising:
receiving reference time information transferred from a centralized unit to a distributed unit;
determining a user equipment-specific propagation delay for one or more user equipments served by the distributed unit, including a first user equipment; and sending control information that enables the first UE to have a reference time that is compensated for propagation delay between the distributed unit and the first UE, wherein the control information is dependent upon
the reference time information and
the determined UE-specific propagation delay for the first UE.

According to various, but not necessarily all, embodiments there is provided an apparatus configurable for use as user equipment for communicating with a distributed unit of a disaggregated network access node that comprises at least the distributed unit and a centralized unit, the apparatus comprising means for:
receiving a user equipment-specific propagation delay for the apparatus;
means for compensating
reference time information using the received UE-specific propagation delay

In some, but not necessarily all examples, the apparatus comprises means for receiving reference time information from the distributed unit.

In some, but not necessarily all examples, the apparatus comprises means for receiving the reference time information and the user-equipment specific propagation delay in different protocol layers.

In some, but not necessarily all examples, the apparatus comprises means for receiving the reference time information and the UE-specific propagation delay in one or more messages.

According to various, but not necessarily all, embodiments there is provided an apparatus for use as part of a network node for communicating (wirelessly) with a terminal node, the apparatus comprising means for:
receiving network time information in a first protocol layer;
determining a terminal-specific latency for one or more (wireless) terminal nodes served by the network node, including a first (wireless) terminal node; and sending control information that enables the first (wireless) terminal node to have a reference time based on network time that is compensated for latency between the apparatus and the first (wireless) terminal node,
wherein the control information is dependent upon
the network time information and
a determined terminal-specific latency for the first (wireless) terminal node; and wherein at least some of the control information is sent via a message in a second protocol layer that is a lower protocol layer than the first protocol layer.

According to various, but not necessarily all, embodiments there is provided examples as claimed in the appended claims.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein.

### DETAILED DESCRIPTION

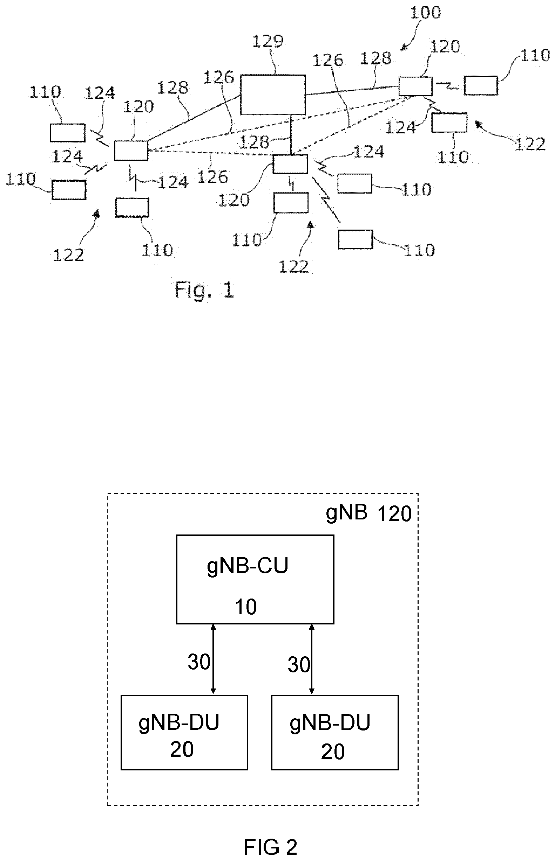

FIG 1 illustrates an example of a network 100 comprising a plurality of network nodes including terminal nodes 110, access nodes 120 and one or more core nodes 129. The terminal nodes 110 and access nodes 120 communicate with each other. The one or more core nodes 129 communicate with the access nodes 120.

The one or more core nodes 129 may, in some examples, communicate with each other. The one or more access nodes 120 may, in some examples, communicate with each other.

The network 100 may be a cellular network comprising a plurality of cells 122 each served by an access node 120. In this example, the interface between the terminal nodes 110 and an access node 120 defining a cell 122 is a wireless interface 124.

The access node 120 is a cellular radio transceiver. The terminal nodes 110 are cellular radio transceivers.

In the example illustrated the cellular network 100 is a third generation Partnership Project (3GPP) network in which the terminal nodes 110 are user equipment (UE) and the access nodes 120 are base stations.

In the particular example illustrated, the network 100 is a Next Generation (or New Radio, NR) Radio Access network (NG-RAN). The NG-RAN consists of gNodeBs (gNBs) 120, providing the user plane and control plane (RRC) protocol terminations towards the UE 110. The gNBs 120 are interconnected with each other by means of an X2/Xn interface 126. The gNBs are also connected by means of the N2 interface 128 to the Access and Mobility management Function (AMF).

FIG 2 illustrates an example in which a network access node 120 (e.g. gNB) has a disaggregated (split) architecture. The gNB 120 comprises one or more distributed units (gNB-DU) 20 and a centralized unit (gNB-CU) 10.

One distributed unit (gNB-DU) 20 supports one or multiple cells 122 (not illustrated in the figure). One cell is supported by only one distributed unit (gNB-DU) 20.

The distributed unit (gNB-DU) 20 is a logical node configured to host Radio Link Control Protocol layer (RLC), Medium Access Control layer (MAC) and Physical layer (PHY) of the access node (gNB) 120.

The centralized unit (gNB-CU) 10 is a logical node configured to host a Radio Resource Control layer (RRC) and other layers of the access node(gNB) 120. The centralized unit (gNB-CU) 10 controls the operation of one or more gNB-DUs 20.

The centralized unit (gNB-CU) 10 and a distributed unit (gNB-DU) 20 communicate via a dedicated interface 30, the F1 interface. The interface 30 connects a Radio Resource Control layer (RRC) hosted by the centralized unit (gNB-CU) 10 to the different, lower layers hosted by the distributed unit (gNB-DU) 20. The F1 interface functions are divided into F1-Control Function (F1-C) and F1-User Function (F1-U).

The centralized unit (gNB-CU) 10 and a distributed unit (gNB-DU) 20 of an access node (gNB) 120 can be separated physically by distances that could be significant to accurate timing at a terminal node (UE) 110 (not illustrated in FIG 2).

Reference time information is information that indicates a time with respect to a time reference. An example of reference time information is Reference Time

Information. Reference Time Information is a time given with reference to an exact System Frame Number (SFN). It is derived at the gNB 120, either at the gNB-CU 10 or at the gNB-DU 20. The gNB-DU is responsible for physical layer processing of all transmissions, hence it has more accurate reference time information with respect to SFN at the Physical layer.

The 6 most significant bits of the 10 bit SFN is communicated from the gNB 120 to the UE 110 in systemFrameNumber within the RRC Master Information Block (MIB). The 4 least significant bits of the 10 bit SFN are determined by the UE 110 at the Physical Layer with a resolution of one radio frame (10 ms). The least significant bit of the SFN therefore changes once every 10 ms.

The Reference Time Information (RTI) can, for example, be determined as a time at or offset in a predetermined or identified manner from a radio frame boundary defined by the SFN.

Reference Time Information (RTI) is sent from gNB-DU 20 to gNB-CU 10 in an RTI Report message in dependence upon an RTI Reporting Control message from the gNB-CU 10. The RTI Report message can be sent on demand or periodically, as specified in the RTI Reporting Control message.

The RTI Report message can, for example, comprise a ReferenceTimelnfo information element. The ReferenceTimelnfo information element comprises the fields: referenceSFN, time, timelnfoType, Uncertainty.

The referenceSFN field indicates the reference SFN corresponding to the reference time information.

The time field indicates a time reference with 10ns granularity. The indicated time is referenced at the network, i.e. without compensating for RF propagation delay.

The timelnfoType field can be used to indicate an origin of the time e.g. the GPS time.

The Uncertainty field indicates the uncertainty of the reference time information provided by the time field.

The gNB-CU 10 builds a RRC time synchronization message (a Reference Time

Information message) that contains a time that corresponds to a reference SFN boundary. The Reference Time Information message comprises ReferenceTimelnfo information element. Encoding of the Reference Time Information message is done at RRC layer, in the gNB-CU 10.

This message, the RRC RTI message can be a broadcast message or a unicast message.

For broadcast RRC, RTI is included in a SIB9 message, which is encoded at gNB-CU 10. The gNB-DU 20 is allowed to re-encode/overwrite the SIB9 provided by the gNB-CU 10, e.g., to improve the accuracy of reference time information. It could also be possible that SIB9 is encoded in RRC directly in gNB-DU 20, e.g. based on configuration from gNB-CU 10.

If the ReferenceTimelnfo IE/field is received in SIB9, the time field indicates the time at the SFN boundary at or immediately after the ending boundary of the SI-window in which SIB9 is transmitted.

For unicast RRC, RTI is included in a DLInformationTransfer message, which is encoded by gNB-CU 10 and sent to the UE 110 via the gNB-DU 20.

If the ReferenceTimelnfo IE/field is received in DLInformationTransfer message, the time field indicates the time at the ending boundary of the system frame indicated by referenceSFN. The UE 110 considers this frame (indicated by referenceSFN) to be the frame which is nearest to the frame where the message is received (which can be either in the past or in the future).

The gNB-DU 20 is configured to estimate and store propagation delays of UEs 110 which are to receive RRC RTI messages from the gNB 120. This configuration may take place via standardized signalling from the gNB-CU 10, i.e. by using F1AP messages, e.g. UE CONTEXT SETUP/MODIFICATION REQUEST. Propagation delay is the time which it takes for the transmission from the gNB 120 to reach the UE 110. It may be defined as the difference between the downlink frame timing in the gNB 120 and the downlink frame timing in the UE 110.

When a signal travels from the gNB 120 to the UE 110, it reflects from surrounding objects, walls, ground etc., so the UE 110 receives multiple reflections of the signal, each of which takes a different path and therefore has different propagation delay. One of the paths, such as the shortest path (e.g., possibly a direct path if there is line-of-sight between the gNB 120 and the UE 110) will have the shortest propagation delay. However, the shortest path may not necessarily be the optimal path. The UE 110 will adjust its DL frame timing (i.e. set its DL frame boundary) based on a detection mechanism, which detects the arrival of the DL signal. The detection mechanism is not fully standardized, so the UEs 110 may at this time use different proprietary implementations. For example, the UE 110 may adjust its DL frame boundary based on the detection of the strongest path (easiest for implementation), or based on the earliest detectable path (where "earliest detectable" is not necessarily the earliest/shortest path, which may be too weak to be detected). The "propagation delay" in this document is the relative difference in DL frame timing between the gNB 120 and the UE 110, which is caused by the propagation delay of some component (e.g., strongest, earliest, and/or the like) of the downlink signal that the UE 110 uses for the detection of the DL frame timing. This relative difference in frame timing at the gNB 120 and the UE 110 (hence misalignment of reference SFN boundaries at the gNB 120 and the UE 110) causes a synchronisation error once the UE 110 associates received RTI with its own reference SFN boundary. Compensation for the propagation delay therefore improves this synchronisation.

A propagation delay estimate can correspond to the reference SFN boundary when the propagation delay compensation is applied to the time information that relates to that boundary.

Propagation delay estimation is UE-specific and takes place in the gNB-DU 20.

There are multiple ways the gNB-DU 20 may estimate the propagation delay for a connected UE 110, e.g. based on Timing Advance command (TAC) monitoring/aggregation, initial Timing Advance estimation during UE's Random Access / Random Access Channel (RACH) procedure, signalling feedback from UE, etc.

A timing advance (TA) is the time offset between downlink (DL) frame timing and an uplink frame (UL) timing as measured at the UE 110. A propagation delay is the time offset between downlink (DL) frame timing at the UE 110 and frame timing at the gNB 120.

If the delays in the UL and DL to the UE 110 are the same then the timing advance is one half of the timing advance.

The propagation delay can be estimated as approximately half of the cumulative Timing Advance that the UE 110 applies to its uplink frame timing (hence, uplink transmissions). An initial Timing Advance that the UE 110 needs to apply is estimated by the gNB 120 based on the reception of the random access preamble (i.e. PRACH preamble). Subsequently, when scheduling the UE 110, the gNB 120 constantly monitors timing offset between the arrival of the uplink frame transmitted by the UE 110 and the frame timing of the gNB 120. If the uplink transmission arrives too early or too late, the gNB 120 updates the timing advance of the uplink frames transmitted by the UE 110. Based on the updated timing advance, the gNB 120 may also derive the propagation delay of downlink transmissions for a certain UE 110, e.g. considering that the propagation delay is half the updated timing advance, or using some other algorithm.

In some but not necessarily all examples, the gNB-DU 20 is configured to estimate and store a propagation delay for a UE 110, by explicitly indicating a list of UEs 110 that the gNB-DU 20 needs to estimate and store propagation delay for. This can be specified as a new procedure triggered by the gNB-CU 10 or the Reference Time Information Reporting Control procedure could be extended for this purpose. The message / IE contents can, for example, include the list of UEs 110 to be added/removed from this configuration.

In some but not necessarily all examples, the gNB-DU 20 is configured to estimate and store a propagation delay for a UE 110. This can be achieved by indicating independently on a per-UE basis that the gNB-DU 20 needs to estimate and store a propagation delay for an identified UE 110. This can be achieved by introducing corresponding IEs in F1AP, e.g. in UE CONTEXT SETUP REQUEST and UE CONTEXT MODIFICATION REQUEST messages to indicate that the UE context being setup (or already existing) should be subject for estimation and storage of a propagation delay estimates. A benefit of this approach is that even if the indication is made independently per UE 110, this can take place during the UE context setup procedure. Thus, there is no additional messaging incurred. Further, the UEs 110 to be estimated can be removed from an active list directly when the UE contexts for that UE 110 have been removed.

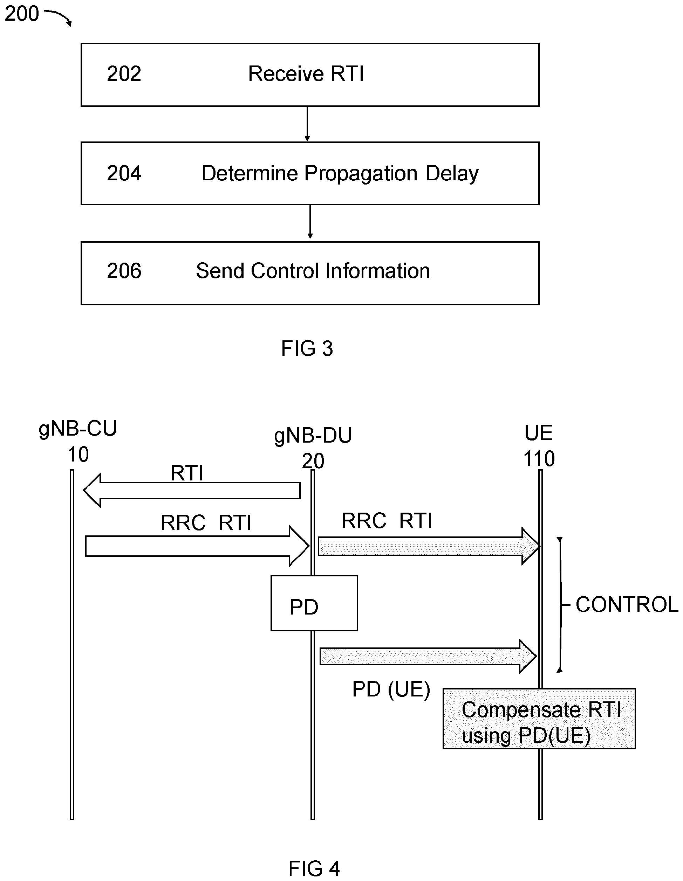

FIG 3 illustrates an example of a method 200 that can be performed at a distributed unit (gNB-DU) 20 that enables UE-dependent time synchronization (UE-specific propagation delay compensation) in a disaggregated (split) gNB architecture.

At block 202, the distributed unit (gNB-DU) 20 receives Reference Time Information (RTI) (an indication of time) transferred from the centralized unit (gNB-CU) 10 to the distributed unit (gNB-DU) 20.

At block 204, the distributed unit (gNB-DU) 20 determines a UE-specific propagation delay for one or more UEs 110 served by the distributed unit (gNB-DU) 20, including a first UE 110.

At block 206, the distributed unit (gNB-DU) 20 sends control information that enables the first UE 110 to have a reference time that is compensated for at least propagation delay between the distributed unit (gNB-DU) 20 and the first UE 110, wherein the control information is dependent upon the Reference Time Information (RTI) and a determined UE-specific propagation delay for the first UE 110.

As described above, the Reference Time Information (RTI) is a time given with reference to an exact Cell System Frame Number (SFN). The Reference Time

Information (RTI) transferred from the centralized unit (gNB-CU) 10 to the distributed unit (gNB-DU) 20 can be encoded within a RRC message. The RRC message can be included in a F1 interface application protocol (F1AP) message (e.g. RRC MESSAGE TRANSFER message). The F1AP message can additionally comprise an indicator indicating that Reference Time Information (RTI) is transferred within the F1AP message because the carried RRC message includes RTI. The F1AP message can comprise information for assisting the distributed unit (gNB-DU) 20 in estimating a UE-specific propagation delay, for example, information indicating a reference system frame number (SFN) which was used for the carried Reference Time Information (RTI).

As illustrated in FIG 4, in some but not necessarily all examples, the UE-specific propagation delay (PD) is sent from the distributed unit (gNB-DU) 20 directly to the first UE 110 (not via the centralized unit (gNB-CU) 10) to enable compensation of the Reference Time Information at the first UE 110.

For example, the gNB-DU 20 sends (event-triggered or periodically) the propagation delay compensation value (PD) for a particular UE 110 to that UE 110 directly, which then compensates the Reference Time Information received in the RRC RTI message by itself.

The PD can be for example sent together with, before or after each RTI message.

The propagation compensation value is calculated at the network side (gNB-DU 20), but applied at the UE 110 side. That compensation is based upon the UE-specific propagation delay (PD) and the cell-specific RTI.

This avoids signaling of the propagation delay over the gNB-CU:gNB-DU interface and avoids any complexity of considering, in RRC time synchronization messages, such as the RRC RTI message, UE-specific parameters such as PD. However, additional signaling of the UE-specific propagation delay over the air interface between the gNB-DU 20 and the target UE 110 is required.

In some but not necessarily all examples, the distributed unit (gNB-DU) 20 is configured to determine whether the first UE 110 needs to apply propagation delay compensation to the provided Reference Time Information (RTI) before providing the propagation delay (PD) to the first UE 110.

In some but not necessarily all examples, the Reference Time Information (RTI) and the propagation delay (PD) are provided to the first UE 110 at different protocol layers. The Reference Time Information (RTI) can be provided at Radio Resource Control layer (RRC) and the UE-specific propagation can be provided in the Medium Access Control layer (MAC), Radio Resource Control layer (RRC), or Physical layer (PHY).

In FIG 4, the RRC RTI and PD are sent separately, for example, in separate messages (e.g. not the same Transport Block).

The PD can be sent via a RRC message in a different Transport Block to RRC RTI. This corresponds to RRC layer signalling from layer 3.

The PD can be sent via a medium access control (MAC) control element (CE) in a different Transport Block to RRC RTI. This corresponds to MAC layer signalling from layer 2.

The PD can be sent via Downlink Control Information (DCI) which is transferred via the Physical Downlink Control Channel (PDCCH). This corresponds to Physical layer signalling from layer 1 and does not use Transport Blocks.

In some examples, when passing the RRC RTI message related to Reference Time Information to the UE 110 via gNB-DU 20, gNB-CU 10 attaches information allowing the gNB-DU 20 to properly determine a propagation delay compensation value (PD) that has to be applied. This information may for example include the reference SFN used for RTI. The RRC RTI message can, in some examples, be included within a F1AP message that comprises the attached information.

If the RRC RTI message is unicast, then in one example as illustrated in FIG 4, the gNB-DU 20 forwards the message transparently and does not modify the received unicast RRC RTI message. The unicast RRC RTI message is passed onto the UE 110 by the gNB-DU 20 transparently.

In this example (e.g. FIG 4), the distributed unit (gNB-DU) 20 sends control information RRC RTI & PD that enables the first UE 110 to have a reference time that is compensated for at least propagation delay between the distributed unit (gNB-DU) 20 and the first UE 110. The control information is dependent upon the Reference Time Information (RTI) and a determined UE-specific propagation delay for the first UE 110 because it comprises the separately sent message RRC RTI & the separately sent message PD.

Although FIG 4 illustrates the PD being sent after RTI, in other examples PD is sent before RTI.

The sending of the propagation delay compensation value (PD) can be event-triggered or can occur periodically. Where the sending of the propagation delay compensation value (PD) is event-triggered, the PD can be sent before the RTI. Where the sending of the propagation delay compensation value (PD) is periodic then the PD can be sent after the RTI (as illustrated) or sent before the RTI.

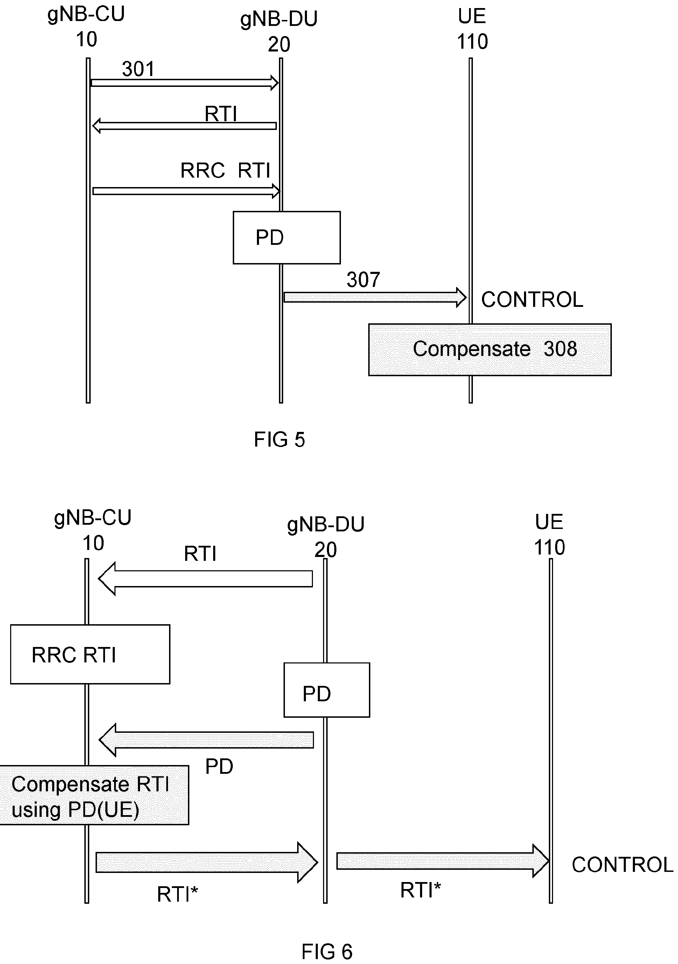

In another example as illustrated in FIG 5, the gNB-DU 20 is configured to transfer
i) a single MAC transport block 307 comprising both the UE-specific propagation delay (PD) (provided as e.g. a MAC CE) and the RRC RTI message comprising the Reference Time Information (RTI) or
ii) two MAC transport blocks 307 each single MAC transport block comprising one of the UE-specific propagation delay (PD) and the RRC RTI message comprising the Reference Time Information.

The RRC RTI message can be unicast.

The sending of the propagation delay compensation value (PD) can be event-triggered or can occur periodically. In this example, FIG 5, the sending of the propagation delay compensation value (PD) can be event-triggered.

In this example (e.g. FIG 5), the distributed unit (gNB-DU) 20 sends control information RRC RTI & PD that enables the first UE 110 to have a reference time that is compensated for at least propagation delay between the distributed unit (gNB-DU) 20 and the first UE 110. The control information is dependent upon the Reference Time Information (RTI) and a determined UE-specific propagation delay for the first UE 110 because it comprises RRC RTI & PD.

Optionally, the gNB-DU 20 can be configured 301 by the gNB-CU 20 to estimate and store propagation delay (PD) for particular UEs 110 that are receiving RTI messages from the gNB 120.

The gNB-DU 20 generates RTI Report message (RTI) containing, e.g., the following elements: Reference time, Reference SFN, Uncertainty, Time Information Type. This information is common for all the UEs 110 in the cell 122.

The gNB-CU 10 generates a unicast RRC message, Reference Time Information message RRC RTI, containing the Reference Time Information provided by the gNB-DU 20. It could be a DLInformationTransfer message or a RRCReconfiguration message including SIB9.

The gNB-CU 10 encapsulates the Reference Time Information message RRC RTI into DL RRC MESSAGE TRANSFER message sent over F1 interface to gNB-DU 20.

In some but not necessarily all examples, the gNB-CU 10 attaches to the DL RRC MESSAGE TRANSFER message information indicating that the encapsulated RTI message contains non-compensated Reference Time Information. In some but not necessarily all examples, the gNB-CU 10 attaches additional information to the DL RRC MESSAGE TRANSFER message, for example, referenceSFN, which is contained in the encapsulated Reference Time Information message. It can be preferential to have this information carried directly as an Information Element in F1 Application Part (F1AP) DL RRC MESSAGE TRANSFER message as gNB-DU 20s cannot always read the referenceSFN information from the Reference Time Information message itself as it is already encapsulated in the PDCP PDU and may be encrypted. A gNB-DU 20 usually has limited RRC encoding and decoding capabilities.

Using the additional information carried in DL RRC MESSAGE TRANSFER indicating that the encapsulated Reference Time Information message contains non-compensated Reference Time Information, the gNB-DU 20 identifies that the RRC Reference Time Information message to be sent to the UE 110 contains uncompensated reference time information.

Based on the additional information provided in the DL RRC MESSAGE TRANSFER from the gNB-CU 10 (e.g. reference SFN) and other information available at the gNB-DU 20 (e.g. Timing Advance of the UE etc.), the gNB-DU 20 determines whether the target UE 110 needs to apply propagation delay compensation (PD) to the provided Reference Time Information and if yes, determines the value of propagation delay (PD) which should be applied by the UE 110 (e.g. the propagation delay (PD) that corresponds to the reference SFN boundary). For example, if the Timing Advance is below a threshold value, then propagation delay is small too, and the gNB-DU 20 determines 306 that the small propagation delay doesn't need to be compensated for.

The gNB-DU 20 sends the Reference Time Information message to the UE 110 along with the additional information about whether propagation delay compensation 308 needs to be applied at the UE 110 and the propagation delay compensation value (PD) that should be used 308 by the UE 110 to compensate the reference time information carried by the Reference Time Information message.

This additional information can be delivered by means of dedicated MAC Control Element (CE), Downlink Control Information (DCI) or RLC Control PDU (C-PDU), which may be sent either within the same PDSCH transmission as RTI message or in separate PDSCH transmissions.

The additional information may also include an indication of the reference SFN the propagation delay value (PD) refers to, message ID of the RTI message the propagation delay value (PD) refers to, request for confirmation of reception of the message carrying additional information.

The information may be either sent each time the Reference Time Information message is sent to the UE 110 or only in case the previously provided propagation delay value (PD) is no longer valid or needs to be updated or is configured to be updated periodically.

The UE 110 decodes the RRC Reference Time Information message and the additional information carried in RLC or MAC or PHY layers. Based on the additional information, the UE 110 checks whether propagation delay compensation needs to be applied and which propagation delay value (PD) should be used, which may either be a propagation delay value (PD) stored in the UE 110 or a propagation delay value (PD) contained in the additional information.

In one of the embodiments, if the reference SFN the propagation delay value (PD) refers to cannot be deduced from the received additional information directly, the UE 110 could be configured with a rule to deduce which PD value to use by itself in the following way:
if the time reference in RTI refers to a past SFN boundary and the propagation delay value (PD) is provided via separate PDSCH transmission, that precedes the Reference Time Information transmission, then the UE 110 may use the last propagation delay value (PD) received before the Reference Time Information or its local propagation delay estimate, up to the UE implementation.

If the time reference refers to a future SFN boundary, the UE 110 may use the first propagation delay value (PD) received after the SFN boundary or its local propagation delay estimate, up to the UEimplementation.

In the UE 110, the Reference Time Information is provided to upper layer after being compensated for propagation delay based on information from gNB-DU 20. The UE 110 may also provide uncompensated RTI together with propagation delay value that upper layers should apply to RTI.

Although the exemplary implementation described, suggests re-using the DL RRC MESSAGE TRANSFER procedure and including an additional flag to indicate that the message contains uncompensated time reference information, it is possible to implement the same approach by introduction of a new procedure. Such new procedure could be used specifically for this purpose. The message itself could comprise both the indication that the contents are uncompensated, and an RRC Container in order to carry the RRC RTI message to be transmitted to the UE 110.

In some examples, the gNB-DU 20 pre-compensates the RTI, forming a compensated RTI (RTI*) that is re-encoded and sent to the UE 110. For example, the time information in the time field of the ReferenceTimelnfor IE of the RRC RTI message is compensated with the provided, respective propagation delay value to form compensated RTI (RTI*). When the target UE 110 (UE#N) receives the compensated RRC RTI message (RTI*), the target UE 110(UE#N) passes this information to upper layers and/or synchronizes its clock to the received pre-compensated time information. In this example, the distributed unit (gNB-DU) 20 sends control information (RTI*) that enables the first UE 110 to have a reference time that is compensated for at least propagation delay between the distributed unit (gNB-DU) 20 and the first UE 110. The control information (CONTROL) is dependent upon the Reference Time Information (RTI) and a determined UE-specific propagation delay for the first UE 110 (PD(UE)) because it comprises the compensated RRC RTI message (RTI*). The UE 110 does not perform any compensation of the received time information as it has been pre-compensated by the gNB-DU 20. The time information is pre-compensated by the gNB-DU 20, so that it takes into account that it is received with a UE-specific delay at the target UE 110. The gNB-DU 20, can therefore, in some examples re-encode the RTI.

In some examples, the distributed unit (gNB-DU) 20 is configured to perform only the method illustrated in FIG 4 (and/or described with reference to FIG 4). In some examples, the distributed unit (gNB-DU) 20 is configured to perform only the method illustrated in FIG 5 (and/or described with reference to FIG 5). In some examples, the distributed unit (gNB-DU) 20 is configured to perform selectively the method illustrated in FIG 4 (and/or described with reference to FIG 4), and/or the method illustrated in FIG 5 (and/or described with reference to FIG 5).

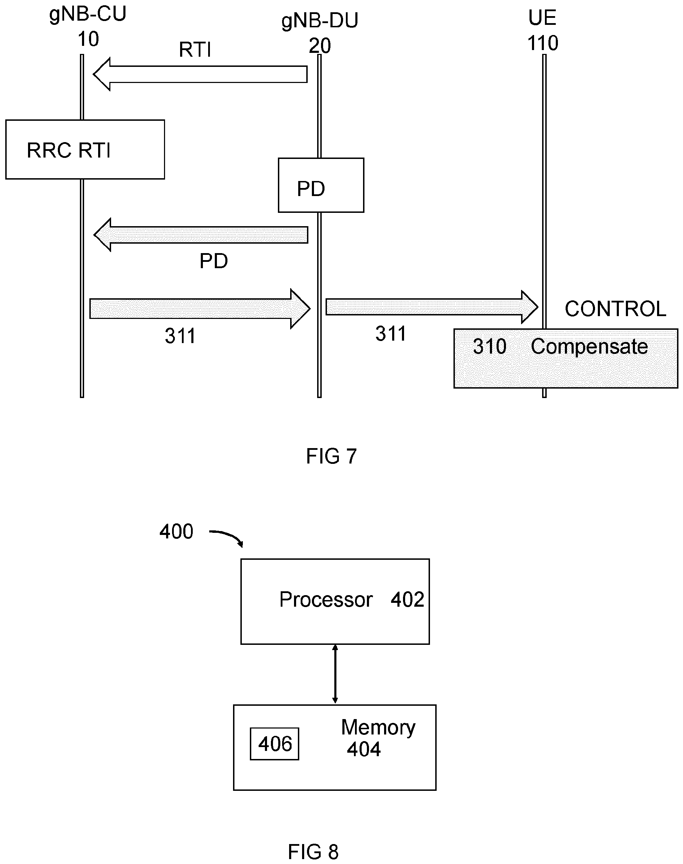

As illustrated in FIG 6 & 7, multiple UE-specific propagation delays (PDs) are sent from the distributed unit (gNB-DU) 20 directly to the centralized unit (gNB-CU) 10 for encapsulation for onward delivery to one or more UEs 110 in UE-specific RRC messages. These can be sent periodically or in response to an event.

In these examples, there is adaptation or augmentation at the gNB-CU 10 of the cell-specific (i.e. not UE-specific) Reference Time Information, to take account of a UE-specific propagation delay PD(UE) and thus enable UE-specific propagation delay compensation on a per-UE basis.

In some but not necessarily all examples, the gNB-DU 20 signals a propagation delay value applicable to each UE 110 being provided with reference time information to gNB-CU 10 as part of the existing F1AP REFERENCE TIME INFORMATION message sent to the gNB-CU 10. This message includes a list of UEs 110 with each entry indicating their corresponding propagation delay.

In some examples, for example as illustrated in FIG 6, compensation can occur at the gNB-CU) 10. The compensated RTI (RTI*) is sent to the UE 110 via the gNB-DU 20.

In some examples, compensation can occur at the gNB-DU 20 or the UE 110. For example as illustrated in FIG 7, compensation can occur at the UE 110.

In FIG 6, the gNB-DU 20 is configured to estimate and store propagation delay PD for UEs 110 that are receiving Reference Time Information messages (RTI) from the gNB-DU 20.

The gNB-DU 20 sends (event-triggered or periodically) at least the propagation delay value (e.g. PD(UE#N)) for a target UE 110 (e.g. UE #N) to the gNB-CU 10, which pre-compensates the RTI, forming a compensated RTI (RTI*) that is sent to the UE 110 via the gNB-DU 20. For example, the time information in the time field of the ReferenceTimelnfor IE of the RRC RTI message is compensated with the provided, respective propagation delay value (e.g. PD#N) to form compensated RTI (RTI*). When the target UE 110 (UE#N) receives the compensated RRC RTI message (RTI*), the target UE 110 (U E#N) passes this information to upper layers and/or synchronizes its clock to the received pre-compensated time information.

In this example, the distributed unit (gNB-DU) 20 sends control information (RTI*) that enables the first UE 110 to have a reference time that is compensated for at least propagation delay between the distributed unit (gNB-DU) 20 and the first UE 110. The control information (CONTROL) is dependent upon the Reference Time Information (RTI) and a determined UE-specific propagation delay for the first UE 110 (PD(UE)) because it comprises the compensated RRC RTI message (RTI*).

The UE 110 does not perform any compensation of the received time information as it has been pre-compensated by the gNB-CU 10. The time information is pre-compensated by the gNB-CU 10, so that it takes into account that it is received with a UE-specific delay at the target UE 110.

In FIG 7, the centralized unit (gNB-CU) 10 is configured to send 311 to the distributed unit (gNB-DU) 20 Reference Time Information (RTI) as uncompensated Reference Time Information.

The centralized unit (gNB-CU) 10 can, for example, be configured to send 311 Reference Time Information (RTI) as uncompensated Reference Time Information:
i) in a single RRC message comprising a UE-specific propagation delay PD(UE) for the first UE 110 and the unmodified RRC RTI message,
ii) in a single RRC RTI message modified to comprise an additional information element or field based on the UE-specific propagation delay PD(UE) for the first UE 110, or
iii) in multiple RRC messages, one comprising the UE-specific propagation delay for the first UE 110 PD(UE) and another being the unmodified RRC RTI message.

The gNB-DU 20 sends (event-triggered or periodically) at least the propagation delay value (e.g. PD#N) for a target UE 110 (e.g. UE #N) to the gNB-CU 10, which does not pre-compensate the time information in the time field of the ReferenceTimelnfor IE of the RRC RTI message with the provided, respective propagation delay value (e.g. PD#N) but instead sends 311 at least the propagation delay value (e.g. PD#N) for the target UE 110 (e.g. UE #N) to the gNB-DU 20 for compensation at the gNB-DU 20 or target UE 110.

When the target UE 110 (UE#N) receives 311 the RRC RTI message and the propagation delay for the target UE110(UE#N), the UE 110 determines 310 compensated time information and provides it to upper layers and/or synchronizes its clock to the determined compensated time information. The UE 110 performs compensation of the received time information as it has not been pre-compensated by the gNB-CU 10. The time information is compensated by the UE 110 to account for a delay that is specific to the target UE 110.

In this example (FIG 7), the distributed unit (gNB-DU) 20 sends control information 311 that enables the first UE 110 to have a reference time that is compensated for at least a propagation delay between the distributed unit (gNB-DU) 20 and the first UE 110. The control information is dependent upon the Reference Time Information (RTI) and a determined UE-specific propagation delay for the first UE 110. For instance, the gNB-DU 20 sends 311 the Reference Time Information to the UE 110 along with the additional information (e.g., whether propagation delay compensation 310 needs to be applied at the UE 110 and the propagation delay compensation value (PD) that should be used 308 by the UE 110 to correct the reference time information).

In some examples, the distributed unit (gNB-DU) 20 is configured to perform only the method illustrated in FIG 6 (and/or described with reference to FIG 6). In some examples, the distributed unit (gNB-DU) 20 is configured to perform only the method illustrated in FIG 7 (and/or described with reference to FIG 7). In some examples, the distributed unit (gNB-DU) 20 is configured to perform selectively the method illustrated in FIG 6 (and/or described with reference to FIG 6) and/or the method illustrated in FIG 7 (and/or described with reference to FIG 7).

In some examples, the distributed unit (gNB-DU) 20 is configured to perform selectively the method illustrated in any of FIGs 4, 5, 6, 7.

FIG 8 illustrates an example of a controller 400 suitable for use in an apparatus, for example a distributed unit (gNB-DU) 20, a centralized unit (gNB-CU) 10, or a terminal node (UE) 110.

Implementation of a controller 400 may be as controller circuitry. The controller 400 may be implemented in hardware alone, have certain aspects in software including firmware alone or can be a combination of hardware and software (including firmware).

As illustrated in FIG 8 the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 10, 20, 110 when loaded into the processor 402. The computer program instructions, of the computer program 406, provide the logic and routines that enables the apparatus 10, 20, 110 to perform the methods illustrated in FIGs 3 to 7. The processor 402 by reading the memory 404 is able to load and execute the computer program 406.

For example, an apparatus (distributed unit (gNB-DU) 20) can therefore comprise:
at least one processor 402; and
at least one memory 404 including computer program code
the at least one memory 404 and the computer program code configured to, with the at least one processor 402, cause the apparatus 20 at least to perform:
   determining a user equipment-specific propagation delay for one or more user equipments served by the distributed unit (gNB-DU) 20, including a first user equipment (UE); and
   sending control information that enables the first UE 110 to have a reference time that is compensated for propagation delay between the distributed unit (gNB-DU) 20 and the first UE 110,
   wherein the control information is dependent upon
   the Reference Time Information (RTI) and
   a determined UE-specific propagation delay for the first UE 110.

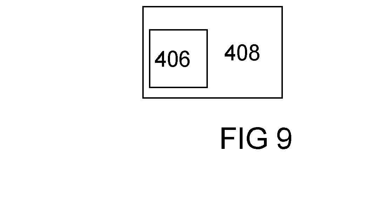

As illustrated in FIG 9, the computer program 406 may arrive at the apparatus 10, 20, 110 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 406. The delivery mechanism may be a signal configured to reliably transfer the computer program 406. The apparatus 10, 20, 110 may propagate or transmit the computer program 406 as a computer data signal.

In some examples, the computer program instructions 406 are configured for causing an apparatus 20 to perform at least the following or for performing at least the following: determining a user equipment-specific propagation delay for one or more user equipments served by the distributed unit (gNB-DU) 20, including a first user equipment (UE); and
sending control information that enables the first UE 110 to have a reference time that is compensated for propagation delay between the distributed unit (gNB-DU) 20 and the first UE 110,
wherein the control information is dependent upon
the Reference Time Information (RTI) and
a determined UE-specific propagation delay for the first UE 110.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the FIGs 3 to 7 may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

There can therefore be provided a distributed unit (gNB-DU) 20 of a network access node (gNB) for use in a disaggregated architecture comprising at least the distributed unit (gNB-DU) 20 and a centralized unit (gNB-CU) 10, the distributed unit (gNB-DU) 20 comprising means for:
receiving Reference Time Information (RTI) transferred from the centralized unit (gNB-CU) 10 to the distributed unit (gNB-DU) 20;
determining a user equipment-specific propagation delay for one or more user equipments served by the distributed unit (gNB-DU) 20, including a first user equipment (UE); and
sending control information that enables the first UE 110 to have a reference time that is compensated for propagation delay between the distributed unit (gNB-DU) 20 and the first UE 110,
wherein the control information is dependent upon
the Reference Time Information (RTI) and
a determined UE-specific propagation delay for the first UE 110.

The Reference Time Information (RTI) transferred from the centralized unit (gNB-CU) 10 to the distributed unit (gNB-DU) 20 can be encoded within a RRC message. The RRC message may be further encapsulated within F1AP message when sent between the gNB-CU 10 and the gNB-DU 20.

The gBN-DU 20 can be configured to estimate and store propagation delays of connected UEs 110.

In some examples, the Reference Time Information and the propagation delay are provided at different protocol layers, for example, the Reference Time Information being provided at Radio Resource Control layer (RRC) and the UE-specific propagation delay being provided in the Medium Access Control layer (MAC), the Radio Resource Control layer (RRC) or the physical layer (PHY) e.g. within DCI.

In some examples, the UE-specific propagation delay is sent from the distributed unit (gNB-DU) 20 directly to the first UE 110 to enable compensation of the Reference Time Information at the first UE 110.

In some examples, the distributed unit (gNB-DU) 20 is configured to use Reference Time Information (RTI) and a UE-specific propagation delay for the first UE 110 to compensate the cell-generic Reference Time Information to provide a compensated Reference Time Information that is specific to the first UE 110 and that provides the control information.

In some examples, one or more UE-specific propagation delays are sent from the distributed unit (gNB-DU) 20 direct to the centralized unit (gNB-CU) for onward delivery to the UE in a UE-specific RRC message.

The distributed unit (gNB-DU) 20 can be configured to receive Reference Time Information (RTI) transferred from the centralized unit (gNB-CU) 10 to the distributed unit (gNB-DU) 20 as a compensated Reference Time Information that provides the control information.

The control information, as previously described, enables the first UE 110 to have a reference time that is compensated for propagation delay between the distributed unit (gNB-DU) 20 and the first UE 110, wherein the control information is dependent upon the Reference Time Information (RTI) and a determined UE-specific propagation delay for the first UE 110.

There can therefore be provided a centralized unit (gNB-CU) 10 of a network access node (gNB) 120 for use in a disaggregated architecture comprising at least the centralized unit (gNB-CU) 10 and a distributed unit (gNB-DU) 20, the centralized unit (gNB-CU) 10 comprising means for:
providing Reference Time Information (RTI) received at least in part from the distributed unit (gNB-DU) 20 to the centralized unit (gNB-CU) 10;
determining a user equipment-specific propagation delay for one or more user equipments 110 served by the distributed unit (gNB-DU) 20, including a first user equipment (UE) 110; and
sending control information that enables the first UE 110 to have a reference time that is compensated for propagation delay between the distributed unit (gNB-DU) 20 and the first UE 110,
wherein the control information is dependent upon
the Reference Time Information (RTI) and
a determined UE-specific propagation delay for the first UE 110.

The Reference Time Information (RTI) transferred from the centralized unit (gNB-CU) 10 to the distributed unit (gNB-DU) 20 can be encoded within a RRC message. The RRC message may be further encapsulated within F1AP message when sent between the gNB-CU 10 and the gNB-DU 20.

In some examples, the centralized unit (gNB-CU) 10 does not receive propagation delays of connected UEs 110.

In some examples, the centralized unit (gNB-CU) 10 does receive propagation delays of connected UEs 110. The gBN-CU 10 can be configured to receive and store propagation delays of connected UEs 110.

In some examples, multiple UE-specific propagation delays are sent from the distributed unit (gNB-DU) 20 direct to the centralized unit (gNB-CU) 10 to enable UE-specific compensation for the propagation delay at the centralized unit (gNB-CU) 10.

In some examples, the centralized unit (gNB-CU) 10 is configured to use received Reference Time Information (RTI) transferred from the distributed unit (gNB-DU) 20 and a received UE-specific propagation delay for the first UE 110 to compensate the cell-generic Reference Time Information to provide a compensated Reference Time Information that is specific to the first UE 110 and that provides the control information.

In some examples, multiple UE-specific propagation delays are sent from the distributed unit (gNB-DU) 20 direct to the centralized unit (gNB-CU) 10 for encapsulation for onward delivery to the UE 110 in a UE-specific RRC message. For example the UE-specific propagation delay for the first UE 110 can be sent from the centralized unit (gNB-CU) 10 via the distributed unit (gNB-DU) 20 to the first UE 110 to enable compensation of the Reference Time Information at the first UE 110.

In some examples, the Reference Time Information and the propagation delay are provided by the centralized unit (gNB-CU) 10 at the same protocol layer, the Reference Time Information and the UE-specific propagation delay being provided at the Radio Resource Control layer (RRC).

In this example, uncompensated Reference Time Information transferred from the centralized unit (gNB-CU) 10 to the UE via the distributed unit (gNB-DU) 20
i) in a single RRC message comprising a UE-specific propagation delay for the first UE 110 and the unmodified RRC RTI message or
ii) in a single RRC RTI message modified to comprise an additional information element or field based on the UE-specific propagation delay for the first UE 110 or
iii) in multiple RRC messages, one comprising the UE-specific propagation delay for the first UE 110 and another being the unmodified RRC RTI message.

It will be appreciated from the foregoing that, in some examples, where compensation occurs at the UE 110, the first UE 110 is configured to use the control information to compensate the Reference Time Information (RTI) using the determined UE-specific propagation delay for the first UE 110.

It will be appreciated from the foregoing that, in some examples, where compensation determination does not necessarily occur at the UE 110, the first UE 110 is configured to use the control information to obtain pre-compensated Reference Time Information (RTI) (dependent upon the uncompensated Reference Time Information (RTI) and the determined UE-specific propagation delay for the first UE 110). The centralized unit (gNB-CU) 10 or the distributed unit (gNB-DU) 20 can be configured to compensate the Reference Time Information (RTI) using the determined UE-specific propagation delay to determine the control information.

The distributed unit can be configured to send the Reference Time Information (RTI) and the determined UE-specific propagation delay in one or more messages.

The UE 110 can receive the Reference Time Information and the propagation delay in different protocol layers. For example, in FIGs 4, 5, and 7, the Reference Time Information can be received in Radio Resource Control layer (RRC) and the UE-specific propagation delay can be received in the Medium Access Control layer (MAC).

The UE 110 can receive the Reference Time Information and the propagation delay in different messages (FIG 4) or the same higher protocol layer message (FIGs 5, 7).

In the foregoing description reference has been made to different data structures such as messages, information elements, fields. The messages can be conveyed at different protocol layers such as the RRC layer or the MAC layer or the PHY layer. It should be appreciated that these data structures are encoded onto information at the Physical layers and conveyed as electromagnetic signals within the network via wired or wireless interfaces. The data structures are 'control data structures' rather than merely content, because they are used in the control of operations of the network. The data structures have technical effect. Each data structure will, therefore, in some jurisdictions be claimed as an invention, for example, a signal with embedded data as described above, the signal being encoded in accordance with an encoding process as described above.

Where a structural feature has been described, it may be replaced by means for performing one or more of the functions of the structural feature whether that function or those functions are explicitly or implicitly described.

The above described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

Although the specific examples above focus on a 3GPP network, it should be appreciated that the examples described can be applied in other networks whether wired or wireless. For example, in some but not necessarily all examples there is provided an apparatus for use as part of a network node for communicating (wirelessly) with a terminal node, the apparatus comprising means for:
receiving network time information in a first protocol layer;
determining a terminal-specific latency for one or more (wireless) terminal nodes served by the network node, including a first (wireless) terminal node; and sending control information that enables the first (wireless) terminal node to have a reference time based on network time that is compensated for latency between the apparatus and the first (wireless) terminal node,
wherein the control information is dependent upon
the network time information and
a determined terminal-specific latency for the first (wireless) terminal node; and wherein at least some of the control information is sent via a message in a second protocol layer that is a lower protocol layer than the first protocol layer.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The term 'configured' when used to describe an apparatus, such as 'an apparatus configured to', implies that the apparatus has been manufactured to have the technical capability to perform that function, that it has technical means for performing the function.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A distributed unit of a network access node for use in a disaggregated architecture comprising at least the distributed unit and a centralized unit, the distributed unit comprising means for:
receiving reference time information transferred from the centralized unit to the distributed unit;
determining a user equipment-specific propagation delay for one or more user equipments served by the distributed unit, including a first user equipment; and
sending control information that enables the first UE to have a reference time that is compensated for propagation delay between the distributed unit and the first UE,
wherein the control information is dependent upon
the reference time information and
a determined UE-specific propagation delay for the first UE.

2. A distributed unit as claimed in any preceding claim, comprising means for estimating and storing propagation delays of connected UEs.

3. A distributed unit as claimed in any preceding claim, wherein the UE-specific propagation delay is sent from the distributed unit directly to the first UE to enable compensation of the Reference time information at the first UE.

4. A distributed unit as claimed in any preceding claim, wherein the reference time information and the propagation delay are provided at different protocol layers, the reference time information being provided at Radio Resource Control layer (RRC) and the UE-specific propagation delay being provided in the Medium Access Control layer (MAC) or the physical layer.

5. A distributed unit as claimed in any preceding claim, comprising means for determining whether the first UE needs to apply propagation delay compensation to the provided reference time information before providing the propagation delay to the first UE.

6. A distributed unit as claimed in any preceding claim, wherein multiple UE-specific propagation delays are sent from the distributed unit direct to the centralized unit for onward delivery to the UE in a UE-specific RRC message.

7. A distributed unit as claimed in any preceding claim, comprising means for receiving reference time information transferred from the centralized unit to the distributed unit as a compensated reference time information that provides the control information.

8. A distributed unit as claimed in any preceding claim, comprising means for receiving reference time information transferred from the centralized unit to the distributed unit within a F1 interface application protocol (F1AP) message, wherein the F1 interface application protocol (F1AP) message comprises an indicator indicating that reference time information is transferred within the F1 interface application protocol (F1AP) message.

9. A distributed unit as claimed in any preceding claim, comprising means for receiving reference time information transferred from the centralized unit to the distributed unit within a F1 interface application protocol (F1AP) message, wherein the F1 interface application protocol (F1AP) message comprises information for assisting the distributed unit in estimating a UE-specific propagation delay for the first UE, for example, information indicating a reference system frame number (SFN) used for the reference time information.

10. A system comprising:
at least the first UE; and
a disaggregated access node comprising a centralized unit and at least the distributed unit as claimed in any preceding claim.

11. A system as claimed in claim 10, wherein the first UE comprises means for using the control information to compensate
the reference time information using the determined UE-specific propagation delay for the first UE and/or wherein the distributed unit comprises means for compensating the reference time information using the determined UE-specific propagation delay to determine the control information or wherein the distributed unit comprises means for sending the reference time information and the determined UE-specific propagation delay in one or more messages.

12. A computer program that when run on a computer of a distributed unit (gNB-DU enables:
receiving reference time information transferred from a centralized unit to the distributed unit;
determining a user equipment-specific propagation delay for one or more user equipments served by the distributed unit, including a first user equipment (UE); and
sending control information that enables the first UE to have a reference time that is compensated for propagation delay between the distributed unit and the first UE,
wherein the control information is dependent upon
the reference time information and
a determined UE-specific propagation delay for the first UE.

13. A method comprising:
receiving reference time information transferred from a centralized unit to a distributed unit;
determining a user equipment-specific propagation delay for one or more user equipments served by the distributed unit, including a first user equipment; and
sending control information that enables the first UE to have a reference time that is compensated for propagation delay between the distributed unit and the first UE,
wherein the control information is dependent upon
the reference time information and
the determined UE-specific propagation delay for the first UE.

14. An apparatus configurable for use as user equipment for communicating with a distributed unit of a disaggregated network access node that comprises at least the distributed unit and a centralized unit, the apparatus comprising means for:
receiving a user equipment-specific propagation delay for the apparatus;
means for compensating
reference time information using the received UE-specific propagation delay

15. An apparatus as claimed in claim 14, comprising means for receiving reference time information from the distributed unit and/or comprising means for receiving the reference time information and the user-equipment specific propagation delay in different protocol layers and/or comprising means for receiving the reference time information and the UE-specific propagation delay in one or more messages.
